# FASCICULE DE BREVET EUROPEEN

(11) **EP 3 741 510 B1**
(45) Date de publication et mention de la délivrance du brevet: **08.11.2023**
(21) Numéro de dépôt: 20173079.3
(22) Date de dépôt: 06.05.2020
(51) Int. Cl.: B25B 5/10, F16B 2/14, F16B 7/04

(54) **AÉRONEF COMPORTANT DES RAIDISSEURS, AU MOINS UN HARNAIS ÉLECTRIQUE, DES SUPPORTS SUPPORTANT LE HARNAIS ÉLECTRIQUE ET COOPÉRANT AVEC LES RAIDISSEURS**
FLUGZEUG MIT VERSTEIFUNGEN, MINDESTENS EINEM ELEKTRISCHEN KABELBAUM, UNTERSTÜTZUNGEN, DIE DEN ELEKTRISCHEN KABELBAUM UNTERSTUTZEN UND MIT DEN VERSTEIFUNGEN ZUSAMMENWIRKEN
AIRCRAFT COMPRISING STIFFENERS, AT LEAST ONE ELECTRIC HARNESS, BRACKETS SUPPORTING THE ELECTRIC HARNESS AND COOPERATING WITH THE STIFFENERS

(30) Priorité: 24.05.2019 FR 1905463
(43) Date de publication de la demande: 25.11.2020
(73) Titulaire: AIRBUS, 31700 Blagnac (FR)
(72) Inventeur: ALET, Fabrice, 31700 BLAGNAC (FR)
(74) Mandataire: Fantin, Laurent

(56) Documents cités:
- EP-A1- 0 723 084
- FR-A1- 3 033 603
- GB-A- 2 108 195
- US-A- 4 958 818
- US-A- 5 249 880
- US-A- 5 352 078
- US-A- 5 680 680
- US-B1- 7 386 922

## Description

La présente demande se rapporte à un aéronef comportant des raidisseurs, au moins un harnais électrique, des supports supportant le harnais électrique et coopérant avec les raidisseurs.

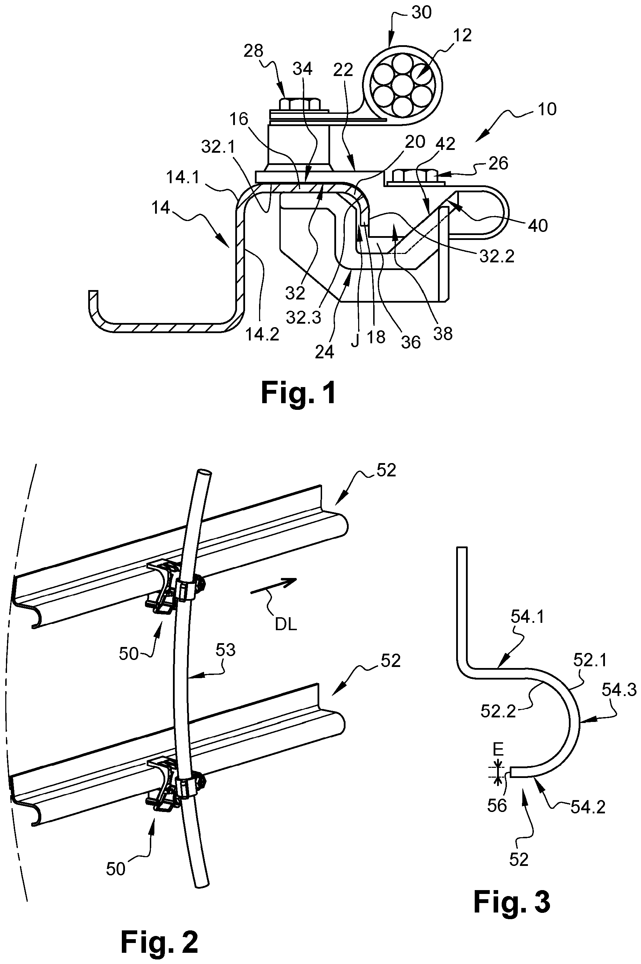

Le document EP723084 décrit un tel support 10 permettant de faire cheminer un faisceau de câbles 12 de cadre en cadre sans les percer, comme illustré sur la figure 1. Selon une configuration, le cadre 14 présente, dans un plan transversal, une section en S et des première et deuxième faces opposées 14.1, 14.2. Cette section en S comporte une âme 16 et une aile 18 reliées par une zone courbe 20, formant entre elles un angle d'environ 90°.

Le support 10 comprend des premier et deuxième mors 22, 24 positionnés de part et d'autre du cadre 14 et reliés entre eux par un élément de serrage 26, comme une vis par exemple.

Le premier mors 22 comprend un point d'ancrage 28, comme un trou taraudé par exemple, auquel est relié un collier 30 entourant le faisceau de câbles 12. Pour l'élément de serrage 26, le premier mors 22 comprend un trou de passage et le deuxième mors 24 un trou taraudé dans lequel se visse l'élément de serrage 26.

En configuration, les premier et deuxième mors 22, 24 sont respectivement plaqués contre les première et deuxième faces 14.1, 14.2 du cadre 14 et maintenus serrés par l'élément de serrage 26.

Selon un mode de réalisation, le premier mors 22 comprend une première surface de contact 32 qui présente un premier pan 32.1 coopérant avec l'âme 16 du cadre 14, un deuxième pan 32.2, perpendiculaire au premier pan 32.1, coopérant avec l'aile 18 du cadre 14, les premier et deuxième pans 32.1, 32.2 étant reliés par une portion courbe 32.3 conformée comme la zone courbe 20 du cadre 14.

Le deuxième mors 24 comprend une deuxième surface de contact 34 coopérant avec l'âme 16 du cadre 14 ainsi qu'une rainure 36 dans laquelle se logent l'aile 18 du cadre 14 et un talon 38 du premier mors 22.

Le talon 38 du premier mors 22 comprend le deuxième pan 32.2 et une première surface d'appui inclinée 40 en contact avec une deuxième surface d'appui inclinée 42 prévue sur le deuxième mors 24. Les première et deuxième surfaces d'appui 40, 42 sont configurées de sorte qu'un serrage de l'élément de serrage 26 provoque le serrage de l'âme 16 du cadre 14 entre le premier pan 32.1 de la première surface de contact 32 du premier mors 22 et la deuxième surface de contact 34 du deuxième mors 24 ainsi que le plaquage du deuxième pan 32.2 de la première surface de contact 32 du premier mors 22 contre l'aile 18 du cadre 14.

Pour permettre le serrage du cadre 14 entre les premier et deuxième mors 22 et 24, il est nécessaire de prévoir un jeu J entre l'aile 18 du cadre 14 et le deuxième mors 24. Si l'aile 18 présente une épaisseur trop importante, le talon 38 du premier mors 22 ne peut pas suffisamment pénétrer dans la rainure 36, rendant impossible le serrage du cadre 14 entre les premier et deuxième mors 22 et 24.

Le document FR3033603 décrit un aéronef comportant un support configuré pour coopérer avec un raidisseur comportant une âme, une aile parallèle à l'âme ainsi qu'une zone de jonction reliant l'âme et l'aile sensiblement perpendiculaire à l'âme. Le support comprend un premier mors en U présentant un fond, une première branche ainsi qu'une deuxième branche avec une face d'extrémité inclinée. Le support comprend également deux deuxièmes mors qui comprennent chacun une première face de contact configurée pour être plaquée contre la face d'extrémité inclinée du premier mors, une rainure configurée pour loger l'aile du raidisseur ainsi qu'une deuxième face de contact, approximativement parallèle à la première branche du premier mors en fonctionnement, plaquant l'âme du raidisseur contre la première branche du premier mors. Le mode de réalisation décrit dans le document FR3033603 ne permet pas d'immobiliser parfaitement le support par rapport au raidisseur.

La présente invention vise à remédier à tout ou partie des inconvénients de l'art antérieur.

L'invention a pour objet un aéronef comportant des raidisseurs et au moins un harnais électrique supporté par les raidisseurs grâce à des supports selon la revendication indépendante 1.

Selon une autre caractéristique, les supports sont positionnés sur les raidisseurs en fonction d'un cheminement imposé au harnais électrique.

D'autres caractéristiques et avantages ressortiront de la description de l'invention qui va suivre, description donnée à titre d'exemple uniquement, en regard des dessins annexés parmi lesquels :
- La figure 1 est une vue de latérale d'un support qui illustre un mode de réalisation de l'art antérieur,
- La figure 2 est une vue en perspective d'un harnais électrique supporté par deux raidisseurs grâce à deux supports qui illustre une application de l'invention,
- La figure 3 est une section d'un raidisseur qui illustre un mode de réalisation de l'invention,
- La figure 4 est une vue en perspective d'un support monté sur un raidisseur qui illustre un mode de réalisation de l'invention,
- La figure 5 est une vue en perspective du support visible sur la figure 4 sans raidisseur,
- La figure 6 est une vue en perspective du support visible sur la figure 4 à l'état démonté,
- La figure 7 est une vue en perspective d'un premier mors du support visible sur la figure 4,
- La figure 8 est une vue en perspective d'un deuxième mors du support visible sur la figure 4, et
- La figure 9 est une coupe du support visible sur la figure 4.

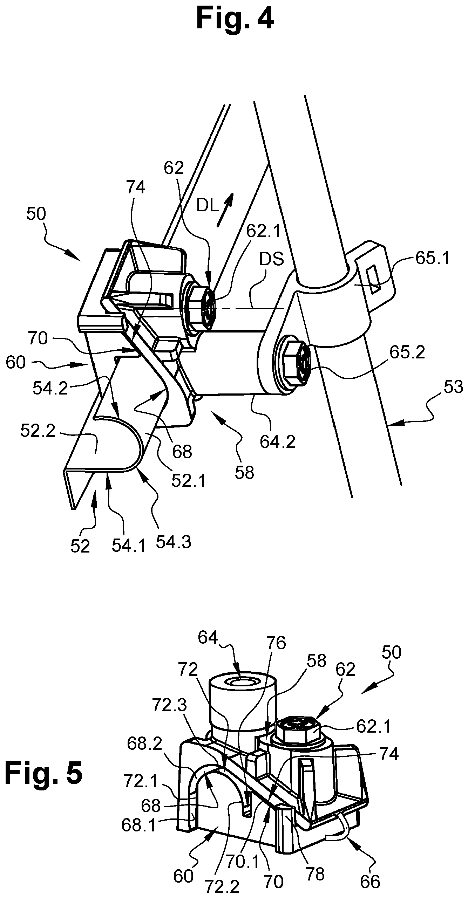

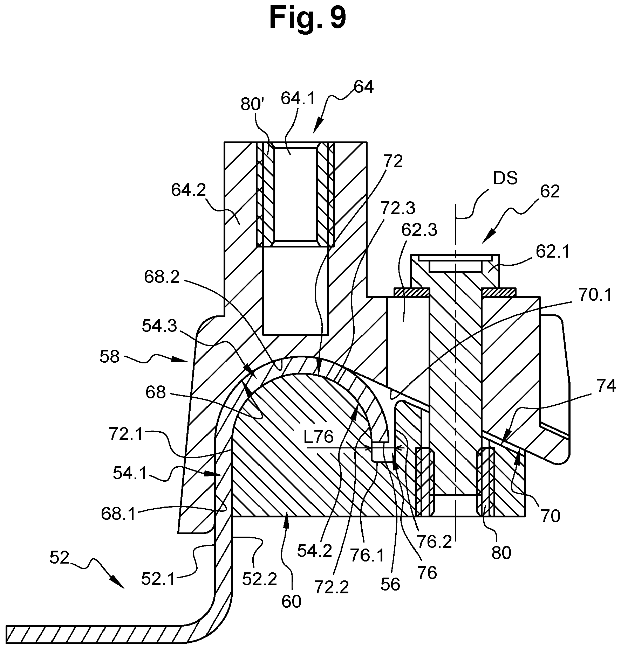

Sur les figures 4 à 9, on a représenté un support 50 apte à être relié, sans percement, à un raidisseur 52 visible sur les figures 3 et 4. A titre d'exemple, le raidisseur 52 peut être une lisse.

Selon une application visible sur la figure 2, un aéronef comprend plusieurs raidisseurs 52 (également appelés lisses) et au moins un harnais électrique 53 supporté par les raidisseurs 52 grâce à des supports 50. Ainsi, les supports 50 permettent de pouvoir faire cheminer un harnais électrique 53 de lisse en lisse en suivant approximativement la courbure du fuselage. Bien entendu, l'invention n'est pas limitée à cette application.

Le raidisseur 52 comprend un profil qui s'étend selon une direction dite direction longitudinale DL. Un plan transversal est perpendiculaire à la direction longitudinale DL.

Selon un mode de réalisation visible sur la figure 3, le raidisseur 52 présente une partie avec une section en U et comprend une âme 54.1, une aile 54.2 comportant un bord libre 56 ainsi qu'une zone de jonction 54.3 reliant l'âme 54.1 et l'aile 54.2.

L'âme 54.1 et l'aile 54.2 peuvent être plus ou moins évasées. Selon une configuration visible sur la figure 3, la zone de jonction 54.3 décrit approximativement un arc de cercle. Cependant, l'invention n'est pas limitée à cette configuration. Ainsi, la zone de jonction 54.3 pourrait être plane et reliée à l'âme 54.1 et à l'aile 54.2 par des zones courbes.

Quel que soit son profil, le raidisseur 52 comprend des première et deuxième faces 52.1, 52.2 opposées. L'aile 54.2 présente une épaisseur E (dimension entre les première et deuxième faces 52.1, 52.2).

Le support 50 comprend des premier et deuxième mors 58, 60 configurés pour coopérer en fonctionnement respectivement avec les première et deuxième faces 52.1, 52.2 du raidisseur 52, au moins un élément de serrage 62 configuré pour serrer en fonctionnement au moins une partie du raidisseur 52 entre les premier et deuxième mors 58, 60 selon une direction de serrage DS ainsi qu'au moins un point d'ancrage 64.

Selon une configuration, l'âme 54.1 est approximativement parallèle à la direction de serrage DS.

Selon un mode de réalisation, l'élément de serrage 62 est une vis 62.1 qui se visse dans un trou taraudé 62.2 prévu au niveau du deuxième mors 60, le premier mors 58 comprenant un trou de passage 62.3 lisse. Selon une configuration, le trou de passage 62.3 a une section oblongue présentant une grande dimension orientée selon une direction transversale perpendiculaire à l'aile 54.1 du raidisseur 52. La section oblongue permet au support 50 de pouvoir s'adapter à différentes épaisseurs E du raidisseur 52 allant de 1,4 mm à 1,8 mm par exemple.

Selon un mode de réalisation, le point d'ancrage 64 est un trou taraudé 64.1 prévu dans un bossage 64.2 solidaire du premier mors 58. Selon une configuration visible sur la figure 4, le harnais électrique 53 est entouré d'un collier 65.1 relié au point d'ancrage par une vis 65.2 se vissant dans le trou taraudé 64.1.

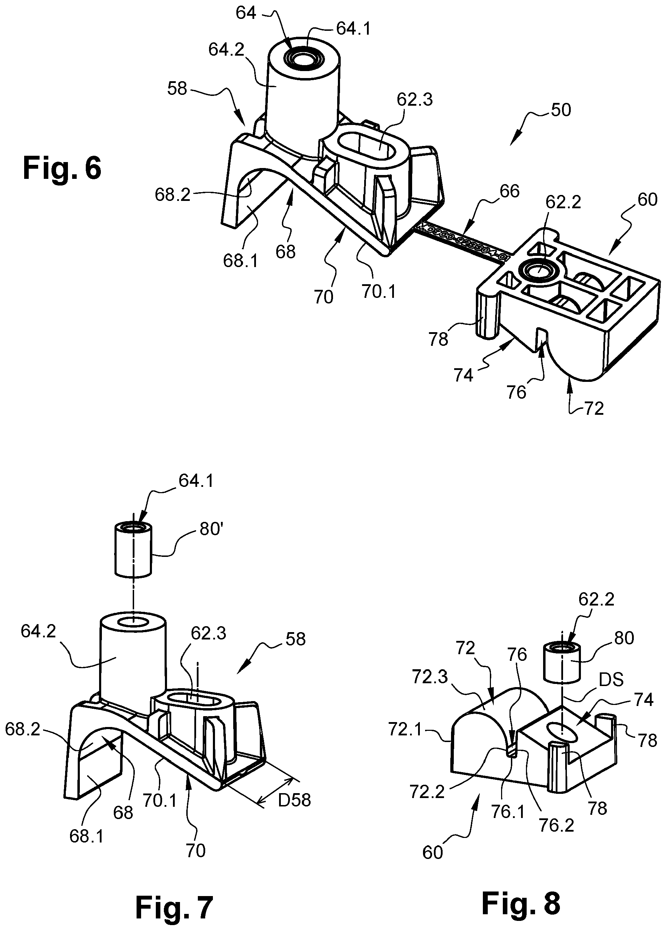

Selon une configuration visible sur les figures 5 et 6, le support 50 comprend un lien souple 66 reliant les premier et deuxième mors 58, 60. Ce lien souple 66 peut être utilisé pour mentionner un numéro d'identification du support 50.

Le premier mors 58 présente une première surface de contact 68 configurée pour prendre appui en fonctionnement contre la première face 52.1 du raidisseur 52 au niveau de l'âme 54.1 et de la zone de jonction 54.3 ainsi qu'une première surface d'appui 70 configurée pour prendre appui contre le deuxième mors 60. En fonctionnement, il peut subsister un faible jeu entre la première surface de contact 68 et l'âme 54.1 du raidisseur 52. Ce jeu permet d'éviter que le support 50 ne soit hyperstatique et de prendre en compte les tolérances de fabrication.

Selon un mode de réalisation, la première surface de contact 68 comprend un premier pan 68.1 plat configuré pour coopérer avec l'âme 54.1 du raidisseur 52 et une portion courbe 68.2 conformée comme au moins une partie de la zone de jonction 54.3. La première surface d'appui 70 présente un deuxième pan 70.1 plat.

Selon une configuration, le premier mors 58 présente, dans un plan transversal, un profil en L formé par les premières surfaces de contact et d'appui 68, 70.

Le deuxième mors 60 présente une deuxième surface de contact 72 configurée pour prendre appui en fonctionnement contre la deuxième face 52.2 du raidisseur 52 au niveau de l'âme 54.1, de la zone de jonction 54.3 et de l'aile 54.2, une deuxième surface d'appui 74 configurée pour prendre appui contre la première surface d'appui 70 du premier mors 58 ainsi qu'une rainure 76 séparant les deuxièmes surfaces de contact et d'appui 72, 74 configurée pour loger le bord libre 56 de l'aile 54.2 du raidisseur 52. En fonctionnement, il peut subsister un faible jeu entre la deuxième surface de contact 72 et l'âme 54.1 du raidisseur 52. Ce jeu permet d'éviter que le support 50 ne soit hyperstatique et de prendre en compte les tolérances de fabrication.

La deuxième surface de contact 72 comprend un premier pan 72.1 configuré pour coopérer avec l'âme 54.1 du raidisseur 52, un deuxième pan 72.2 configuré pour coopérer avec l'aile 54.2 du raidisseur 52 ainsi qu'une zone intermédiaire 72.3 conformée comme la zone de jonction 54.3.

La rainure 76 présente un fond 76.1. Elle est délimitée par la deuxième surface de contact 72 (plus précisément le deuxième pan 72.2 de la deuxième surface de contact 72) et un flanc 76.2 reliant le fond 76.1 et la deuxième surface d'appui 74. Selon une configuration, le flanc 76.2 est parallèle au premier pan 72.1 de la deuxième surface de contact 72 qui est parallèle à la direction de serrage DS.

La rainure 76 présente une largeur L76 légèrement supérieure à l'épaisseur E du bord libre 56 de l'aile 54.2 du raidisseur 52. Cette largeur L76 peut varier entre 1.4mm et 1.8mm. La largeur L76 doit être légèrement supérieure à l'épaisseur E maximale possible du raidisseur 52, pour tenir compte des tolérances. En pratique, la largeur L76 est égale à 2mm.

En complément de la rainure 76, la deuxième surface de contact 72 du deuxième mors 60 est configurée pour immobiliser en translation le raidisseur 52 selon une direction transversale perpendiculaire à la direction de serrage DS, dans les deux sens, et la première surface de contact 70 du premier mors 58 est configuré pour plaquer le raidisseur 52 contre la deuxième surface de contact 72 du deuxième mors 60 ainsi que le bord libre 56 du raidisseur 52 dans la rainure 76.

La présence de la rainure 76 combinée aux formes des première et deuxième surfaces de contact 68, 72 permet d'obtenir une immobilisation et un positionnement précis du support 50 par rapport au raidisseur 52.

Selon une configuration, le deuxième pan 70.1 de la première surface d'appui 70 du premier mors 58 forme un angle inférieur à 90° avec le premier pan 68.1 de la première surface de contact 68. En parallèle, la deuxième surface d'appui 74 est sensiblement plane et orientée de manière à obtenir un appui plan avec le deuxième pan 70.1 de la première surface de d'appui 70 du premier mors 58. Cette inclinaison (plus particulièrement le sens d'inclinaison) des première et deuxième surfaces d'appui 70, 74 combinée au trou de passage 62.3 de section oblongue pour l'élément de serrage 62 permet d'obtenir un glissement entre les première et deuxième surfaces d'appui 70, 74 ainsi qu'un serrage de l'âme 54.1 du raidisseur 52 entre les première et deuxième surfaces de contact 68, 72 lors du serrage de l'élément de serrage 62.

Selon une configuration, le support 50 comprend un système pour immobiliser les premier et deuxième mors 58, 60 l'un par rapport à l'autre selon la direction longitudinale. Selon un mode de réalisation, le deuxième mors 60 comprend deux plots 78, en saillie par rapport à la deuxième surface d'appui 74, espacés d'une distance sensiblement égale à une dimension D58 du premier mors 58 selon la direction longitudinale.

Selon un mode de réalisation, les premier et deuxième mors 58, 60 sont réalisés en matière plastique par moulage, et comprennent un premier insert 80 avec le trou taraudé 62.2 prévu dans le deuxième mors 60 pour l'élément de serrage 62 ainsi qu'un deuxième insert 80' avec le trou taraudé 64.1 prévu dans le premier mors 58 pour le point d'ancrage 64.

Les inserts 80, 80' sont métalliques.

Les premier et deuxième mors 58, 60 sont largement évidés pour réduire la masse du support 50.

Les supports 50 de l'invention sont parfaitement adaptés pour faire suivre un cheminement donné à un harnais électrique 53 en le reliant de raidisseur 52 en raidisseur 52. Dans ce cas, les supports 50 sont positionnés sur les raidisseurs 52 en fonction du cheminement imposé au harnais électrique 53.

## Revendications

1. Aéronef comportant des raidisseurs (52), au moins un harnais électrique (53), des supports (50) supportant le harnais électrique (53) et coopérant avec les raidisseurs (52), les raidisseurs (52) présentant chacun des première et deuxième faces (52.1, 52.2) opposées et comprenant une âme (54.1), une aile (54.2) comportant un bord libre (56) ainsi qu'une zone de jonction (54.3) reliant l'âme (54.1) et l'aile (54.2), chaque support (50) comprenant des premier et deuxième mors (58, 60), au moins un élément de serrage (62) serrant au moins une partie du raidisseur (52) entre les premier et deuxième mors (58, 60), le premier mors (58) présentant une première surface de contact (68) prenant appui contre la première face (52.1) du raidisseur (52) et une première surface d'appui (70) prenant appui contre le deuxième mors (60), le deuxième mors (60) présentant une deuxième surface de contact (72) prenant appui contre la deuxième face (52.2) du raidisseur (52) et une deuxième surface d'appui (74) prenant appui contre la première surface d'appui (70) du premier mors (58), le deuxième mors (60) comprenant une rainure (76), séparant les deuxièmes surfaces de contact et d'appui (72, 74) du deuxième mors (60), logeant le bord libre (56) de l'aile (54.2) du raidisseur (52), **caractérisé en ce que** la rainure (76) présente une largeur (L76) sensiblement égale à une épaisseur (E) du bord libre (56) de l'aile (54.2) du raidisseur (52), **en ce que** la deuxième surface de contact (72) du deuxième mors (60) comprend des premier et deuxième pans (72.1, 72.2) prenant appui contre respectivement l'âme (54.1) et l'aile (54.2) du raidisseur (52) ainsi qu'une zone intermédiaire (72.3) conformée comme la zone de jonction (54.3) du raidisseur (52) et **en ce que** la première surface de contact (68) du premier mors (58) comprend un premier pan (68.1) prenant appui contre l'âme (54.1) du raidisseur (52) et une portion courbe (68.2) conformée comme au moins une partie de la zone de jonction (54.3) du raidisseur (52).

2. Aéronef selon la revendication précédente, **caractérisé en ce que** le premier mors (58) présente, dans un plan transversal, un profil en L formé par les premières surfaces de contact et d'appui (68, 70).

3. Aéronef selon l'une des caractéristiques précédentes, **caractérisé en ce que** la première surface d'appui (70) du premier mors (58) forme un angle inférieur à 90° avec le premier pan (68.1) de la première surface de contact (68).

4. Aéronef selon la revendication précédente, **caractérisé en ce que** l'élément de serrage (62) est une vis (62.1) qui se visse dans un trou taraudé (62.2) prévu au niveau du deuxième mors (60), le premier mors (58) comprenant un trou de passage (62.3) lisse avec une section oblongue.

5. Aéronef selon l'une des revendications précédentes, **caractérisé en ce que** les supports (50) sont positionnés sur les raidisseurs (52) en fonction d'un cheminement imposé pour le harnais électrique (53).

## Patentansprüche

1. Luftfahrzeug mit Versteifungen (52), mit wenigstens einem elektrischen Kabelbaum (53), und mit Halterungen (50), die den elektrischen Kabelbaum (53) halten und mit den Versteifungen (52) zusammenwirken, wobei die Versteifungen (52) jeweils eine erste und eine zweite gegenüberliegende Seite (52.1, 52.2), einen Steg (54.1), einen Flügel (54.2) mit einem freien Rand (56) sowie einen Verbindungsbereich (54.3) aufweisen, der den Steg (54.1) und den Flügel (54.2) miteinander verbindet, wobei jede Halterung (50) eine erste und eine zweite Backe (58, 60) umfasst, wobei wenigstens ein Klemmelement (62) wenigstens einen Teil der Versteifung (52) zwischen der ersten und der zweiten Backe (58, 60) einklemmt, wobei die erste Backe (58) eine erste Kontaktfläche (68) aufweist, die sich an der ersten Seite (52.1) der Versteifung (52) abstützt, und eine erste Auflagefläche (70) aufweist, die sich an der zweiten Backe (60) abstützt, wobei die zweite Backe (60) eine zweite Kontaktfläche (72) aufweist, die sich an der zweiten Seite (52.2) der Versteifung (52) abstützt, und eine zweite Auflagefläche (74) aufweist, die sich an der ersten Auflagefläche (70) der ersten Backe (58) abstützt, wobei die zweite Backe (60) eine Nut (76) umfasst, die die zweiten Kontakt- und Auflageflächen (72, 74) der zweiten Backe (60) trennt und den freien Rand (56) des Flügels (54.2) der Versteifung (52) aufnimmt, **dadurch gekennzeichnet, dass** die Nut (76) eine Breite (L76) aufweist, die im Wesentlichen gleich einer Dicke (E) des freien Randes (56) des Flügels (54.2) der Versteifung (52) ist, dass die zweite Kontaktfläche (72) der zweiten Backe (60) eine erste und eine zweite Fläche (72.1, 72.2) aufweist, die sich jeweils gegen den Steg (54.1) und den Flügel (54.2) der Versteifung (52) abstützen, sowie einen Zwischenbereich (72.3), der wie der Verbindungsbereich (54.3) der Versteifung (52) geformt ist, und dass die erste Kontaktfläche (68) der ersten Backe (58) eine erste Fläche (68.1) aufweist, die sich gegen den Steg (54.1) der Versteifung (52) abstützt, und einen gekrümmten Abschnitt (68.2) aufweist, der wie wenigstens ein Teil der Verbindungszone (54.3) der Versteifung (52) geformt ist.

2. Luftfahrzeug nach dem vorhergehenden Anspruch, **dadurch gekennzeichnet, dass** die erste Backe (58) in einer Querebene ein L-förmiges Profil aufweist, das von den ersten Kontakt- und Auflageflächen (68, 70) gebildet wird.

3. Luftfahrzeug nach einem der vorhergehenden Merkmale, **dadurch gekennzeichnet, dass** die erste Auflagefläche (70) der ersten Backe (58) einen Winkel von weniger als 90° mit der ersten Fläche (68.1) der ersten Kontaktfläche (68) bildet.

4. Luftfahrzeug nach dem vorhergehenden Anspruch, **dadurch gekennzeichnet, dass** das Klemmelement (62) eine Schraube (62.1) ist, die in ein Gewindeloch (62.2) geschraubt ist, das an der zweiten Backe (60) vorgesehen ist, wobei die erste Backe (58) ein glattes Durchgangsloch (62.3) mit einem länglichen Querschnitt aufweist.

5. Luftfahrzeug nach einem der vorhergehenden Ansprüche, **dadurch gekennzeichnet, dass** die Halterungen (50) an den Versteifungen (52) in Abhängigkeit von einem vorgeschriebenen Verlauf für den elektrischen Kabelbaum (53) angeordnet sind.

## Claims

1. Aircraft having stiffeners (52), at least one electrical harness (53), supports (50) supporting the electrical harness (53) and cooperating with the stiffeners (52), the stiffeners (52) each having opposite first and second faces (52.1, 52.2) and comprising a core (54.1), a flange (54.2) having a free edge (56) and a joining zone (54.3) connecting the core (54.1) and the flange (54.2), each support (50) comprising first and second jaws (58, 60), at least one clamping element (62) clamping at least a part of the stiffener (52) between the first and second jaws (58, 60), the first jaw (58) having a first contact surface (68) bearing against the first face (52.1) of the stiffener (52) and a first bearing surface (70) bearing against the second jaw (60), the second jaw (60) having a second contact surface (72) bearing against the second face (52.2) of the stiffener (52) and a second bearing surface (74) bearing against the first bearing surface (70) of the first jaw (58), the second jaw (60) comprising a groove (76), separating the second contact and bearing surfaces (72, 74) from the second jaw (60), housing the free edge (56) of the flange (54.2) of the stiffener (52), **characterized in that** the groove (76) has a width (L76) substantially equal to a thickness (E) of the free edge (56) of the flange (54.2) of the stiffener (52), **in that** the second contact surface (72) of the second jaw (60) comprises first and second facets (72.1, 72.2) bearing respectively against the core (54.1) and the flange (54.2) of the stiffener (52) and an intermediate zone (72.3) shaped like the joining zone (54.3) of the stiffener (52) and **in that** the first contact surface (68) of the first jaw (58) comprises a first facet (68.1) bearing against the core (54.1) of the stiffener (52) and a curved portion (68.2) shaped like at least a part of the joining zone (54.3) of the stiffener (52).

2. Aircraft according to the preceding claim, **characterized in that** the first jaw (58) has, in a transverse plane, an L-shaped profile formed by the first contact and bearing surfaces (68, 70).

3. Aircraft according to either of the preceding features, **characterized in that** the first bearing surface (70) of the first jaw (58) forms an angle of less than 90° with the first facet (68.1) of the first contact surface (68).

4. Aircraft according to the preceding claim, **characterized in that** the clamping element (62) is a screw (62.1) that is screwed into a tapped hole (62.2) provided at the second jaw (60), the first jaw (58) comprising a plain passage hole (62.3) with an oblong section.

5. Aircraft according to one of the preceding claims, **characterized in that** the supports (50) are positioned on the stiffeners (52) as a function of a routing imposed for the electrical harness (53).
